# EUROPÄISCHE PATENTSCHRIFT

(11) **EP 2 868 416 B1**
(45) Veröffentlichungstag und Bekanntmachung des Hinweises auf die Patenterteilung: **26.12.2018**
(21) Anmeldenummer: 14003489.3
(22) Anmeldetag: 10.10.2014
(51) Int. Cl.: B23G 7/00, B23G 7/02

(54) **Verfahren zum Ausbilden einer Bohrung und zugehöriger Bohrungsformer**
Method for forming a hole and associated hole former
Procédé de formation d'un trou et dispositif de formation de trou correspondant

(30) Priorität: 29.10.2013 DE 102013017949
(43) Veröffentlichungstag der Anmeldung: 06.05.2015
(73) Patentinhaber: Fraunhofer-Gesellschaft zur Förderung der angewandten Forschung e.V., 80686 München (DE)
(72) Erfinder: Kott, Mathias, 01219 Dresden (DE)
(74) Vertreter: Grünecker Patent- und Rechtsanwälte PartG mbB

(56) Entgegenhaltungen:
- DE-A1-102006 028 380
- JP-U- S6 341 422
- US-A- 3 097 426
- US-A- 4 539 832
- US-A1- 2013 004 262

## Beschreibung

Die Erfindung betrifft ein Verfahren zum Ausbilden einer Bohrung, insbesondere einer Passungsbohrung, in einer Vorbohrung eines zu bearbeitenden Werksstückes und den dazugehörigen Bohrungsformer.

Aus dem allgemeinen Stand der Technik sind spanlose und spanende Herstellungsverfahren zum Ausbilden von maßgenauen Bohrungen in einem Werkstück bekannt.

Nachteilig bei den spanenden Verfahren zum Ausbilden passgenauer Bohrung in einem Werkstück, ist, dass hierbei Späne anfallen, die zum Einen den Prozess an sich, nämlich das Bohren behindern können, in dem die Späne in das Bohrloch geraten und sich gegen Bohrung und Bohrer verkeilen, und zum Anderen zur Verunreinigungen der Umgebung führen.

Zu den spanenden Verfahren gehört das Bohren/Fräsen. Beim Bohren bzw. Fräsen ist ein starker Verschleiß der Schneiden zu beobachten. Außerdem wird beim Bohren bzw. Fräsen mit einer geringen Drehzahl gearbeitet, wodurch die Produktionsgeschwindigkeit sinkt und umgekehrt die Herstellungskosten steigen.

Ein anderes Verfahren zum Ausbilden von maßgenauen Bohrungen ist das Schleifen, wobei eine Auslenkung des Schleifbohrers gegenüber dem Werkstück erforderlich ist. Dies ist besonders kostenintensiv, da ein hoher anlagentechnischer Aufwand bereitgestellt werden muss. Ferner ist mit Schleif-Verfahren nur eine begrenzte Qualität in der Oberflächengenauigkeit in der Bohrung erzielbar.

Das Fräsen und Ausdrehen wird den spanenden Verfahren zugeordnet, wobei hier ebenfalls eine Auslenkung der Radiusachse des formgebenden Fräselements notwendig ist, was einen anlagentechnisch hohen Aufwand bedingt, da die Auslenkung besonders genau ausgeführt werden muss, was besondere technische Steuer- und Sensorvorrichtungen erfordert.

Die spanlosen Verfahren zum maßgenauen Bohren können in Schneid-Verfahren, Feinschneid-Verfahren und adiabatisches Trennen unterteilt werden.

Bei den spanlosen Schneid-Verfahren wird zunächst vorgeschnitten und anschließend nachgeschnitten. Nachteilig hierbei ist, dass wenigstens zwei Arbeitsgänge erforderlich sind, ein undefinierbarer Abfall der Nachschneidestufe auftreten kann und ein starker Verschleiß am Nachschneidestempel zu beobachten ist.

Bei Feinschneid- oder Genauschneid-Verfahren mittels Ringzacke wird die angrenzende Geometrie des Bohrloches beeinflusst und ist nicht für alle Materialien geeignet. Außerdem ist hierbei ein sehr hoher anlagentechnischer Aufwand erforderlich.

Beim adiabatischen Trennen, bei dem ein thermodynamischer Vorgang gesteuert werden muss, ist ein sehr hoher anlagentechnischer Aufwand notwendig.

Bei den oben genannten Verfahren ist ein maßgenaues und genaues Herstellen einer Passungsbohrung mit besonders großem Aufwand verbunden.

US 4,539,832 betrifft ein Lochvergrößerungswerkzeug, das mehrere hintereinander angeordnete Wirkabschnitte mit unterschiedlichen Funktionen und Gestalten aufweist, um einen gesickten Abschnitt in einer Bohrung bzw. die Randabschnitte von Sickengipfeln zurückzukneten. Das Werkzeug weist einen sogenannten Pilotabschnitt 30 auf, der mit einem platten Zylinder zum Einsetzen einer zu bearbeitenden Bohrung 91 ausgebildet ist. An den Pilotabschnitt 30 grenzt ein Gewindeabschnitt 40 mit Furchkanal an, der ein im Querschnitt v-förmiges Schneidgewinde 41 aufweist, das sich schraubenlinienförmig um die Drehachse des Werkzeuges erstreckt. Um das mit dem Gewindeschneider 40 ausgebildete Gewinde wieder zurück gegen die Wandung der Bohrung zu drücken, ist angrenzend zu dem Gewindeabschnitt ein konusartiger Rampenabschnitt 50 vorgesehen, der einen stufenförmigen Einschnitt aufweist. Nachteilig hierbei ist, dass das von dem Gewindeabschnitt ausgefurchte Material auch wieder zurück in den Furchkanal geknetet werden kann, um dadurch Material zu Verfestigung der Bohrung verloren geht.

US 3,097,424 offenbart ebenfalls ein Werkzeug mit hintereinander angeordneten, unterschiedlich gestalteten Abschnitten mittels denen zunächst die Bohrung mittels eines ersten Bohrlochräumers 21 geglättet, dann Gewindehügel in der Bohrung mittels eines Gewindeabschnittes 15 ausgebildet werden sollen, die dann nachfolgend mittels einem zweiten Bohrlochräumer 22 geglättet werden sollen.

Auch hierbei ist durch die hintereinander angeordnete Anordnung der Bohrlochräume die Möglichkeit gegeben, dass das zuvor ausgefurchte Material zurück in den Furchgang gedrückt wird, sodass dieses Material nicht zur weiteren Verfestigung und Umformung und Ausbildung einer Passbohrung zur Verfügung steht.

JP S6341422 U zeigt ein Werkzeug mit einem Bohrlochräumer 62, an denen ein Gewindeabschnitt 60 anschließt.

DE 10 2006 028 389 A1 betrifft einen Gewindefurcher zum Nachbearbeiten oder Erzeugen eines Gewindes mit einem schraublinienförmig verlaufenden Gewindeabschnitt, der unterschiedlich gestaltet Furchzähne (11 bis 17) aufweist, um bis zum Erzeugen des Endgewindes vorab sich dem Endgewinde annähernde Zwischengewinde auszubilden.

Aufgabe der Erfindung ist es daher, ein Verfahren und einen Bohrungsformer bereitzustellen, mit der die oben genannten Probleme gelöst werden und Materialverlust eine Bohrung mit hoher Passgenauigkeit hergestellt werden kann.

Die Aufgabe wird hinsichtlich des Verfahrens erfindungsgemäß mit einem Verfahren mit den Merkmalen nach Anspruch 1 gelöst.

Die Aufgabe wird hinsichtlich des Bohrungsformers erfindungsgemäß mit einem Bohrungsformer mit den Merkmalen nach Anspruch 6 gelöst.

Nach einem Aspekt wird ein Verfahren bereitgestellt, mittels dem eine Bohrung in einem Werkstück ausgebildet wird, aufweisend folgende Schritte,
- Ausbilden einer Vorbohrung mit einem vorbestimmten Innendurchmesser, die von der Innenwandung der Vorbohrung definiert wird,
- Ausfurchen eines Furchganges durch Verdrängen von Material aus dem Furchgang,
- Zurückdrücken des aus dem Furchgang ausgebrachten Materials gegen die Innenwandung der Vorbohrung unter Ausbildung der Passungsbohrung.

Der wesentliche Vorteil dieses Verfahrens liegt darin, ohne Abtrag von Material eine maßlich genaue Bohrung ausbilden zu können, deren Mantelfläche charakteristische schraubenlinienförmig verlaufende Furche aufweist, die einem erheblichen Anteil des tragfähigen Durchmessers der Bohrung bilden und daher die Tragfähigkeit der Bohrungsstruktur erhöhen.

Nach einer Ausführungsform des Verfahrens weist das Ausfurchen und Zurückdrücken eine translatorische und rotatorische Bewegungskomponente auf, die mittels einer schraubenlinienförmige Furchbewegung erzielt werden, wobei nacheinander ein Ausfurchen, Verdrängen, Zurückfalten und Glätten des aus der Innenwandung der Vorbohrung ausgebrachten Materials erfolgt. Dies hat den Vorteil, dass an der Innenwandung eine Furche ausgebildet werden. Die Furchen können in speziellen Fällen z.B. beim Schmieren, Kleben usw. durchaus vorteilhaft sein, da diese eine Vergrößerung der Oberfläche bedeuten. Das Glätten bedeutet wenigstens abschnittsweise eine Verbesserung der Oberflächengüte in der Bohrung.

Das von einem Furch-Faltstollen an einem Bohrungsformer ausgefurchte Material wird durch die Zusammenwirkung der Rotationsbewegung des Bohrungsformers und des schraubenlinienförmigen Verlaufs des Furch-Faltstollens gegen die Innenwandung der Vorbohrung zurück gedrückt und gefaltet. Beim dem Bohrungsfurchen und durch die Rückumformung wird eine kaltverfestigte Oberflächenstruktur erzeugt, was sich besonders im Hinblick auf die Aufnahme von Passelemente positiv auswirkt.

Unter einem schraubenlinienförmigen Verlauf ist hierbei ein helixartiger Kurvenverlauf entlang einer zylindrischen Mantelfläche zu verstehen, der sich mit bevorzugt konstanter Steigung um die zylindrische Mantelfläche des Zylinders wickelt.

Nach einem anderen Aspekt der Erfindung wird ein Bohrungsformer zum Ausbilden einer Bohrung, insbesondere einer Passungsbohrung, bereitgestellt, wobei der Bohrungsformer einen Formkopf aufweist, der einen konusförmigen Abschnitt aufweist, auf dessen Umfangsfläche ein sich schraubenlinienförmig verlaufenden Furch-Faltstollen erstreckt, der eine Formnut definiert.

Der schraubenlinienförmige Verlauf des Furch-Faltsollens erstreckt sich hierbei bevorzugt nach einem helixartigen Verlauf entlang der zylindrischen Mantelfläche des Bohrungsformers. Der Verlauf des Furch-Faltstollens kann wenigstens abschnittsweise einen spiralförmigen Kurvenverlauf aufweisen, insbesondere im Bereich des kegelförmigen Abschnittes des Bohrungsformers. Unter einem spiralförmigen Verlauf ist hierbei der Verlauf einer Kurve zu verstehen, die um einen Punkt oder eine Achse verläuft und sich je nach Betrachterperspektive von diesem/r entfernt oder annähert.

Vorteilhafte Ausführungsformen des Verfahrens und des Bohrungsformers ergeben sich aus den Unteransprüchen.

Nachfolgend wird die vorliegende Erfindung anhand von Ausführungsbeispielen in Verbindung mit den zugehörigen Zeichnungen näher erläutert. In diesen zeigen:
- Fig. 1: eine erste Ausführungsform eines erfindungsgemäßen Bohrungsformer in einer perspektivischen Ansicht,
- Fig. 2: eine schematische Ansicht des Bohrungsformers aus Fig. 1 in einer Vorbohrung eines Werkstückes beim maßgenauen Bohrungsformen einer Passungsbohrung,
- Figuren 2a bis 2d: in schematischen Teilschnittansichten die einzelnen Bohrungsformschritte zum Ausbilden der maßgenauen Passungsbohrung an unterschiedlichen Positionen im Werkstück in vergrößerter Ansicht,
- Figuren 3a bis 3c: in schematischer Ansicht unterschiedliche Schnittansichten des Formschaftes des Bohrungsformers,
- Fig. 4: eine Teilschnittansicht des schraubenlinienförmigen Furchungs-Verlaufs, der eine Passungsbohrung bildet, die mit dem Bohrungsformers in einer Vorbohrung des Werkstücks ausgebildet worden ist,
- Fig. 5: eine zweite Ausführungsform eines erfindungsgemäßen Bohrungsformers in einer perspektivischen Ansicht,
- Fig. 6: eine Schnittansicht des erfindungsgemäßen Bohrungsformers gemäß der Schnittführung I-I aus Figur 5, und
- Figur 7: eine schamtische Schnittansicht in vergrößerten Maßstab des Furch-Faltstollens des Bohrungsformers und des mit dem Furch-Faltstollen bearbeitenden Werkstückes.

In den nachfolgenden Figuren ist zu einer besseren Orientierung und Definition der räumlichen Erstreckung des Bohrungsformers ein lokales X-Y-Z-Bezugssystem in ausgewählten Figuren zugeordnet. Das X-Y-Z-Bezugssystem bezieht sich hierbei auf die Schwereachse S des Bohrungsformers 1 bzw. der Schwereachse einer Vorbohrung 32.

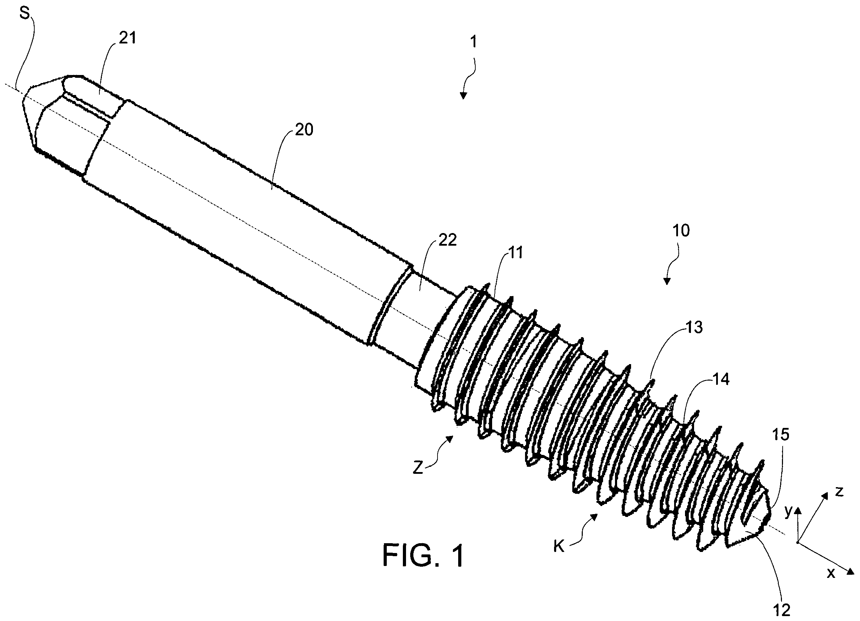

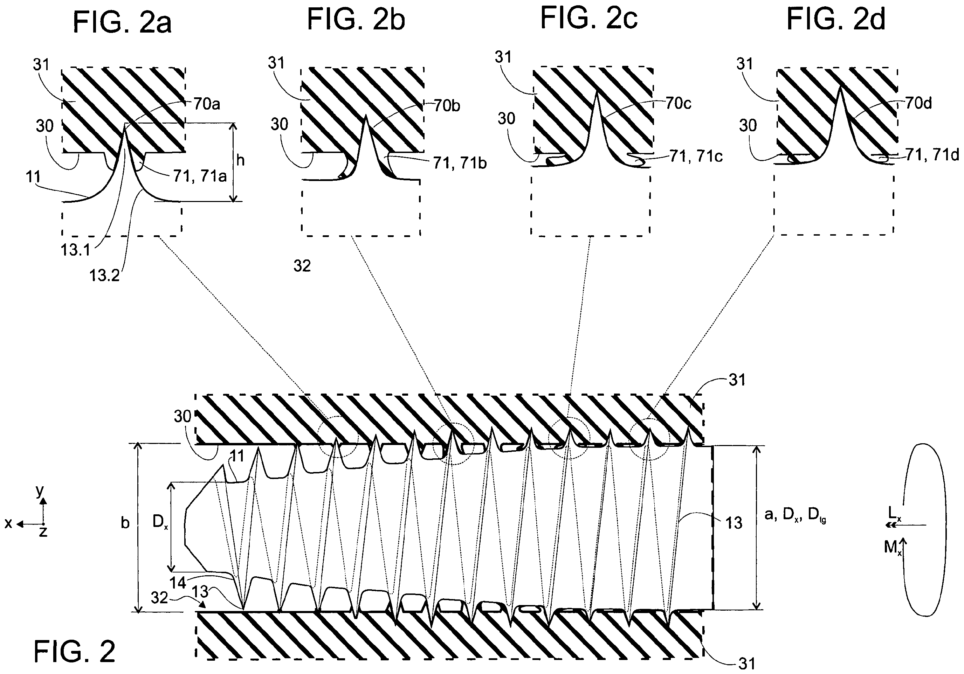

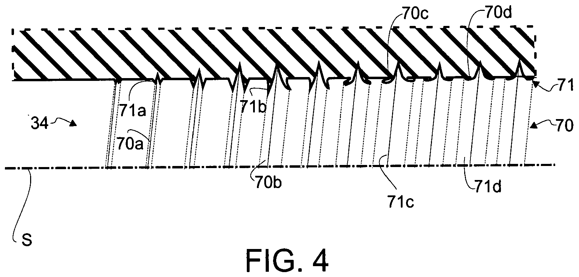

Fig. 1 ist in einer perspektivischen Ansicht ein erfindungsgemäßer Bohrungsformer 1 dargestellt. Der Bohrungsformer 1 weist einen Formkopf 10 zum Furchen und Formen einer maßgenauen Bohrung 34, insbesondere einer Passungsbohrung, mit einem Furchgang 70, 70a, 70b, 70c, 70d (siehe Figur 4) in eine Vorbohrung 32 eines Werkstücks 31 auf (siehe Fig. 2). Das Material 71, das aus dem jeweiligen Furchgang 70, 70a, 70b, 70c, 70d ausgefurcht worden ist, wird teilweise wieder gegen die Wandung 30 der Vorbohrung 32 gefaltet und bildet die maßgenaue Bohrung 34 (siehe Figur 4).

An den Formkopf 10 angrenzend ist ein Montageschaft 20 ausgebildet, der an seinem Endabschnitt, der von dem Formkopf 10 abgewandt ist, einen Montageantriebsschaft 21 mit einem inbusartigen, vierkantigen Querschnitt aufweist, über den der Montagekopf 20 und der damit verbundene Formkopf 10 in eine rotatorische Mx und translatorische Bewegung Lx versetzt werden kann.

Hierfür wird der Bohrungsformer 1 in eine entsprechende Vorrichtung eingebaut, die den Bohrungsformer 1 in eine translatorische und rotatorische Bewegung versetzen kann, deren rotatorische und translatorische Bewegung in Abhängigkeit von der auszubildenden Öffnungsgröße der Passungsbohrung 34 angepasst wird. Außerdem wird hierbei die rotatorische und translatorische Dreh- und Verfahrbewegung an den schraubenlinienförmigen Verlauf eines sich um die zylindrische Z und konusartige K Mantelfläche des Formkopfes 10 schraubenlinienförmig erstreckenden Furch-Faltstollens 13 angepasst.

Nach der ersten Ausführungsform, die in Figur 1 gezeigt ist, ist der Formkopf 10 über einen Versatzschaft 22 mit dem Montageschaft 20 verbunden. Der Formkopf 10 ist an dem Versatzschaft 22 stofflich einstückig ausgebildet.

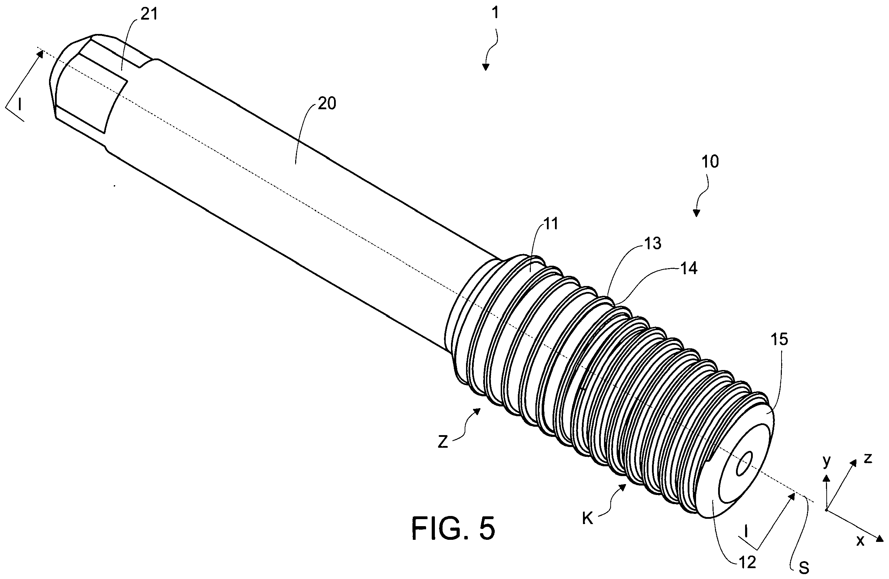

Der Formkopf kann, wie aus Figuren 5 ersichtlich ist, die eine andere Ausführungsform des Bohrungsformers 1 zeigt, auch ohne Versatzschaft ausgebildet sein. Der Formkopf 10 grenzt in der in Figur 5 gezeigten Ausführungsform direkt an den Montageschaft 20 an.

Der Formkopf 10 kann jedoch auch über eine Schraubverbindung, Bajonettverbindung, Passverbindung und/ oder Steckverbindung mit dem Versatzschaft 22 und dem zugehörigen Montageschaft 20 rotations- und translationsfest montierbar ausgebildet sein.

Der Formkopf 10 ist von einem Formschaft 12 mit zylindrischer Z und konusartiger Schaftform K ausgebildet, von dem sich in schraubenlinienförmiger Erstreckung der Furch-Faltstollen 13 erstreckt, der mittels einer Furch-Faltstollenwurzel 14 einstückig und stetig an die Außenumfangsfläche des zylindrischen und konusartigen Formschaft 12 anschließt. Unter einer schraubenlinienförmigen Erstreckung ist hierbei ein helixartiger Kurvenverlauf um die zylindrische Mantelfläche des Formschaftes 12 mit einer konstanten Steigung zu verstehen.

Nach einer nicht in den Figuren dargestellten Ausführungsform weist der Formschaft 12 des Bohrungsformers 10 lediglich eine konusförmige Schaftform K auf.

Der Furch-Faltstollen 13 weist, wie in Figuren 2a bis 2d gezeigt, eine Furchspitze 13.1 und eine Faltwurzel 13.2 auf, die zusammen mit der Furch-Faltstollenwurzel 14 wenigstens teilweise eine Formnut 11 definiert (siehe Figur. 2a).

Die Geometrie und die Kontur der Furch-Faltstollenwurzel 14 kann auf unterschiedliche Art und Weise an dem Formkopf 10 gestaltet sein. Beispielsweise kann die Furch-Faltenstollenwurzel 14 einen Fasenübergang mit einer abgeschrägten Fläche und /oder einen kreisförmigen Übergang mit einer gerundeten Fläche aufweisen. Der Furch-Faltstollen 14 kann auch direkt, ohne einen Übergang, insbesondere am kegelförmigen Abschnitt des Formkopfes 10, der zum Ausfurchen einer Materialswulst vorgesehen ist, ausgebildet sein.

Der Formschaft 12 weist, wie in Figur 2 dargestellt, in Längserstreckung hin zum Montageschaft 20 einen zunehmenden Durchmesser Dx auf, so dass die Außenumfangsfläche von der Formkopfspitze 15 hin zu dem Versatzschaft 22 bzw. dem Montageschaft 20 einen sanften Anstieg aufweist, wie beispielsweise in Fig. 2 in der Längsschnittansicht ersichtlich.

Der Formschaft 12 weist von der Formkopfspitze 15 an einen im Wesentlichen kegelförmigen bzw. konusartiger Grundkörper K auf, an den ein zylindrischer Grundkörper Z angrenzt.

Der Furch-Faltstollen 13 erstreckt sich in einem schraubenlinienförmigen Verlauf an der Außenumfangsfläche des Formschaftes 15 und weist über seine Länge in X-Erstreckung von der Formkopfspitze 15 hin zum Versatzschaft 22 unterschiedliche Erstreckungslängen h auf, wie beispielsweise in Fig. 2a dargestellt. D.h. die Höhe h des Furch-Faltstollens 13 zwischen einer Furchspitze 13.1 und einer Faltwurzel 13.2 ist über den schraubenlinienförmigen Verlauf variabel, insbesondere am kegelförmigen Formschaft K, ausgebildet, wie in Figuren 2a und 2b gezeigt, was sich aus dem kegelförmigen Grundkörper K und den zylindrischen Grundkörper Z des Formschaftes 12 ergibt. Die Höhe h des Furch-Faltstollens 13 ist insbesondere an dem Abschnitt des Formkopfes 10 konstant, wo der zylindrische Durchmesser Dx des Formkopfes 10 ebenfalls konstant ist, nämlich der zylindrische Formschaftabschnitt Z.

Ferner erstreckt sich zwischen dem Furch-Faltstollen 13 eines ersten Furchgangs und dem hierzu schraubenlinienförmig versetzten Furch-Faltstollen 13 eines nachfolgenden Furchgangs eine Formnut 11 über die gesamte Außenumfangsfläche des Formschaftes 12 parallel und versetzt zum schraubenlinienförmigen Verlaufs des Furch-Faltstollens 13. Die Lage der Formnut 11 wird von der jeweils seitlich angrenzenden Furch-Faltstollenwurzel 14 bzw. der Faltwurzel 13.2 definiert.

Fig. 2 zeigt in einer schematischen Ansicht den in einer Vorbohrung 32 eines Werkstückes 31 eingesetzten und translatorisch in X-Richtung hin- und her bewegbaren und rotatorisch um die Längsachse Lx herum bewegbaren Bohrungsformer 1.

Bei dem Verfahren zum Ausbilden einer Bohrung, insbesondere eine Passungsbohrung, in einer Vorbohrung 32 ist vorteilhafterweise der Durchmesser b der Vorbohrung 32 größer als der Schaftdurchmesser Dx des Formschaftes 12 und der fertige Bohrdurchmesser a der Passungsbohrung 34. Der Bohrungsformer kann vorteilhafterweise nicht nur zur Herstellung von Passungsbohrungen 34 sondern auch zu Korrektur der Durchmesser-Öffnung von auf andere Art und Weise hergestellter Bohrungen verwendet werden, da der Furch-Faltstollen 13 durch das Verdrängen und Zurückfalten von Material aus der Bohrung deren Öffnungsweite einstellen kann. Die Passungsbohrung 34 weist durch den Furch- und Faltvorgang eine maßlich genaue Bohrungsöffnung auf, deren Durchmesser exakt den Tragedurchmesser Dtg eines in die Bohrung einzusetzenden und einzupassenden Bauteils aufweist.
Der Bohrungsformer 1 verfügt über eine Keilschneide bzw. den Furch-Faltstollen 13, der durch eine rotierende Bewegung Mx, wenigstens bis zum Bereich des maximalen Durchmessers des Formkopfes 10 bzw. des Formschaftes 12 stetig den notwendigen Werkstoff aus der Mantelfläche der Vorbohrung 32 herausdrücken kann. Das herausgedrückte Material wird dann in den exakten Tragedurchmesser Dtg des einzupassenden Bauteils gebracht.

Außerdem weist der Bohrungsformer 1 einen sanft ansteigenden Kernkegel bzw. Formschaft 12 auf, der vor dem Versatzschaft 22 in einen zylindrischen Formschaft Z übergeht, der das lichte Maß a der zu fertigenden Bohrung 34 besitzt. Der Furch-Faltstollen 13 ist an dem Formschaft 12 mit einer für die Umformung der entstehenden Materialwulst 71 des aus der Vorbohrung ausgefurchten Materials eines Werkstückes 31 geeigneten Geometrie verbunden, insbesondere der Furch-Faltenstollenwurzel 14.
Bei der translatorischen Lx und rotatorischen Mx Bewegung des Bohrungsformers 1 zur Ausbildung eines schraubenlinienförmigen Furchganges 70, 70a, 70b, 70c, 70d in der Vorbohrung 32 wird die translatorischen Lx und rotatorischen Mx Bewegung des Bohrungsformers 1 an den schraubenlinienförmigen Verlauf des Furch-Faltstollens 13 angepasst, so dass das von dem Furch-Faltstollen 13 aus der Wandung 30 des Werkstückes 31 der Vorbohrung 32 ausgebrachte bzw. ausgefurchte Material 71, 71a, 71b, 71c, 71d (siehe Figuren 2a bis 2d) zurück gegen die Wandung 30 geformt und gefaltet wird und damit die Passungsbohrung 34 bildet. Unter einer Passungsbohrung 34 ist hierbei eine Bohrung zu verstehen, die zur passgenauen Aufnahme und zum Halten darin einzupassender, zusätzlicher Bauteile, wie Buchsen, Dübel etc. ausgebildet wird. Bei dem Furch- und Falt-Vorgang wird das gefaltete Material in der Formnut 14 von den Abschnitten des daran angrenzenden Furch-Faltsollen 13 und des Formschaftes 12 zusätzlich geglättet. Dieses Glätten führt zu einer Verbesserung der Oberflächengüte der zurückgefalteten Materialwulst 71d (siehe Figuren 2d, 4).
Der Furch-Faltstollen 13 ist in Figur 2 in einer teilweise in die Innenwandung 30 der Vorbohrung 32 eingefurchten Position gezeigt und hat und je nach Lage des Furch-Faltstollen in der Vorbohrung 32 bereits mehr oder weniger mit der Furchung und Faltung des Innenwandungs-Materials 71 zum Ausbilden eines schraubenlinienförmigen Furchganges 70 begonnen.

Der Furch-Faltstollen 13 ist jeweils derart ausgebildet, dass der Furch-Faltstollen 13 spanlos Material 71 aus einer Innenwandung 30 einer Vorbohrung 32 herausfurcht bzw. herausdrückt und seitlich der ausgebildeten Furche 70 wieder gegen die Innenwandung 30 der Vorbohrung 32 zurück drückt und faltet. Das zurück-gedrückte bzw. zurück-gefaltete Material 71 bildet hierbei einen Teil des Furchganges 70 aus.

Durch den Furch- und Faltvorgang wird der Furchgang 70 in der Vorbohrung 30 in dem Werkstück 31 ausgebildet. Beim Ausbilden des Furchganges 70 in der Vorbohrung 32 findet durch das Falten eine Kaltverfestigung statt. Die Materialwulste 71, insbesondere die mittels der Formnut 11 gefalteten und geglätteten Materialwulste 71, bilden hierbei die Passungsbohrung 34 aus (siehe Figur 4).

Figuren 2a bis 2d zeigen unterschiedliche Falt- und Furchschritte des Furch-Faltstollens 13.

Je nach Lage der Furchspitze 13.1 wird das aus der Furchstelle entlang des Furch-Faltsollen 13 ausgedrückte Material mittels der Faltwurzel 13.2 und / oder der Formnut 11 wieder zurück gegen die Wandung 30 der Vorbohrung 32 bei gleichzeitiger Rotation des Bohrungsformers 1 um seine Langsachse X geformt, wobei die Materialwulst 71 gegen die Vorbohrung gefaltet und von der Formnut 11 auch geglättet wird.

Fig. 2a zeigt ein teilweises Einfurchen der Furchspitze 13.1 des Furch-Faltstollens 13 in die Innenwandung 30 des Werkstücks 31, wobei eine Materialwulst 71a an der Einfurchstelle der Furchspitze 13.1 ausgebildet wird und in die Kavität der Vorbohrung 32 verdrängt wird.

Fig. 2b zeigt eine stärkeres Einfurchung der Furchspitze 13.1 des Furch-Faltstollens 13 in die Innenwandung 30, wobei die verdrängte Materialwulst 71b an die Außenfläche der Faltwurzel 13.2 angeschmiegt wird und in das Tal der Formnut 11 verdrängt wird.

Figuren 2c und 2d zeigen das Falten der sich an den Furch-Faltstollenbreiten anschmiegenden Materialwulst 71c, 71d zurück gegen die Innenwandung 30 der Vorbohrung 32, wobei hierbei die vorteilhafte Kaltverformung und das Heraus- und Zurückdrücken der Materialwulst 71, 71a, 71b, 71c, 71d gegen die Wandung 30 der Vorbohrung 32 dargestellt ist.

Bevorzugt weist der Formschaft 12 einen im Wesentlichen kreisförmigen Querschnitt auf. Zur Verbesserung der Schmierung bzw. der Schmiereigenschaften kann der Formschaft 12 auch einen polygonalen Querschnitt aufweisen.

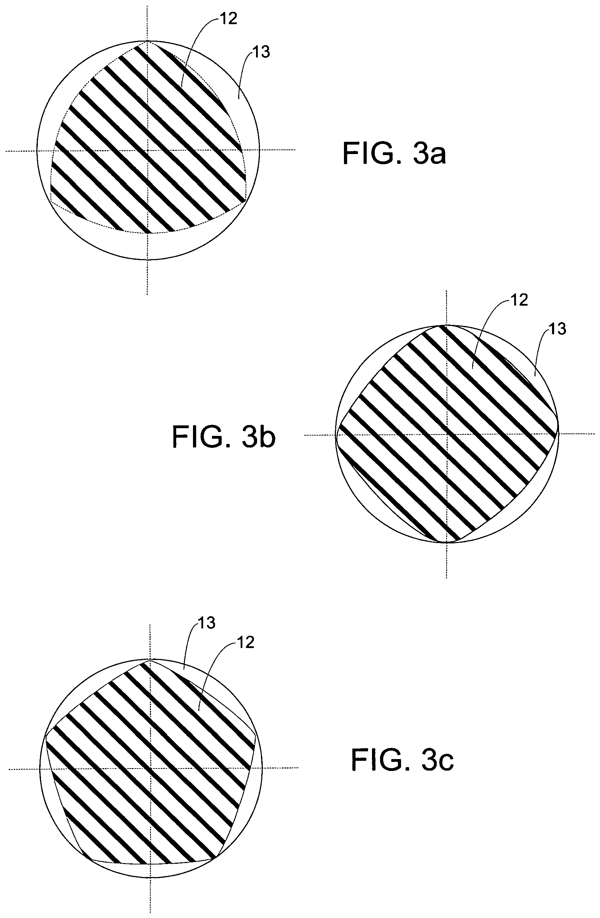

Figuren 3a bis 3c zeigen unterschiedliche Ausführungsbeispiele polygonaler Querschnittansichten des Formschaftes 12 des Bohrungsformers 1, wie sie bei den Ausführungsformen des in Figuren 1 und 5 gezeigten Bohrungsformers 1 ausgebildet sein können, wobei zur Verbesserung der tribologischen und umformtechnischen Eigenschaften der Querschnitt des Formschaftes 12 bevorzugt polygonal ausgeführt ist.

Figur 3a zeigt einen dreieckförmigen Formschaft 13 mit polygonaler Oberfläche, auf der sich der schraubenlinienförmig verlaufende Furch-Faltstollen 13 erstreckt.

Der Querschnitt des jeweils in Figur 3b und 3c gezeigten Formschaftes 12 ist im Wesentlichen viereckig bzw. fünfeckig mit polygonaler Oberfläche, auf der sich jeweils der schraubenlinienförmige verlaufende Furch-Faltstellen 13 erstreckt.

Zur Steigerung der Schmierungseigenschaften kann zusätzlich oder ausschließlich an dem Formschaft 10, insbesondere in den Formnuten 11, eine Schmiernut zur Speicherung und Bereitstellung eines Schmierstoffes ausgebildet sein.

Fig. 4 zeigt in einer schematischen Teilschnittansicht den schraubenlinienförmigen Verlauf des in Figur 2 gefurchten Furchganges, der Furchen 70 und Materialwülste 71 aufweist.

Bei dem Bohrungsfurchen der in Fig. 4 gezeigten Bohrungsstruktur 70, 71 findet durch das Umfalten der Materialwülste 71 an dem Furch-Faltstollen 13 eine Kaltverfestigung der Oberflächenstruktur statt, was sich im Hinblick auf die Aufnahme von Passelementen in der Bohrung 34 besonders positiv auswirkt. Mit den Furchen 70 wird ohne Abtrag von Material eine maßlich genaue Passungsbohrung 34 hergestellt, deren Innendurchmesser a wesentlich von dem Spiralformenfurchen bestimmt wird.

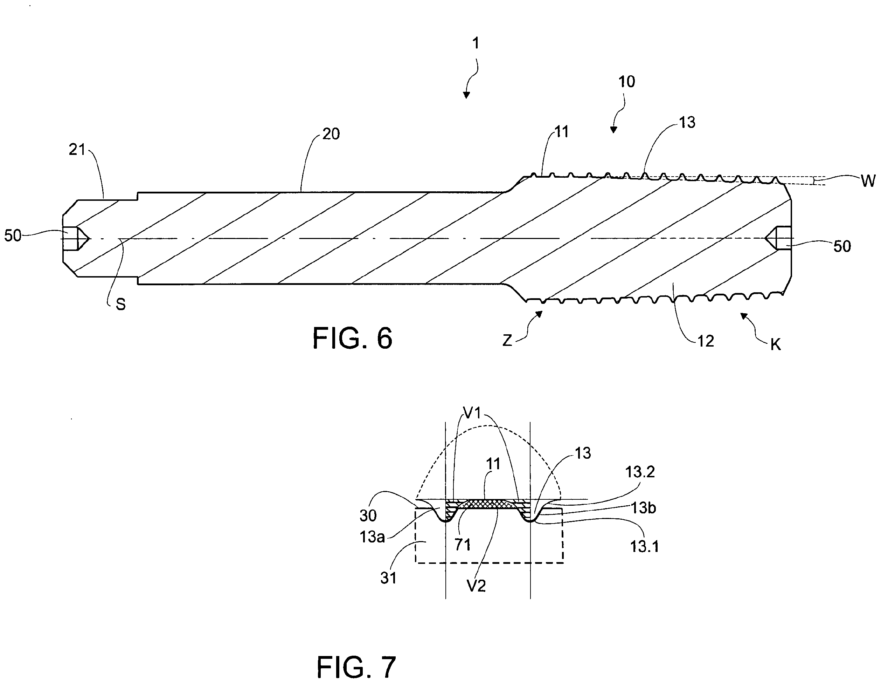

Figuren 5 und 6 zeigt eine zweite Ausführungsform des Bohrungsformers 1.

In Figur 6 ist eine Längsschnittansicht nach der Schnittlinie I-I des in Figur 5 gezeigten Bohrungsformers 1 dargestellt.

Die Ausführungsform des in Figur 5 gezeigten Bohrungsformers 1 unterscheidet sich von dem in Figur 1 gezeigten Bohrungsformer darin, dass in beiden Endabschnitten des Bohrungsformers 1 von Figur 5 in dem Endabschnitt des Montageschaftes 20 und in dem Endabschnitt des Formkopfes 10 jeweils ein Sackloch 50 ausgebildet ist. Das Sackloch 50 hat vorzugsweise einen inbusartigen Querschnitt und dient als Zentrierhilfe. Die Schwerachse des Sackloches 50 ist daher zu der Schwerelinie S des Bohrungsformers 1 ausgerichtet und mit dieser identisch ausgebildet.

Ferner weist die zweite Ausführungsform des Bohrungsformers 1 keinen Versatzschaft 22 auf. In der zweiten Ausführungsform des Bohrungsformers 1 grenzt der Montageschaft 20 direkt an den Formkopf 10 an. Zwischen dem Formkopf 10 und dem Montageschaft 20 ist ein Übergang mit einer gerundeten Fase ausgebildet, der die unterschiedlichen Durchmesser des Montageschaftes 20 und des Formkopfes 10 ausgleicht.

In Figur 6 ist mit gestrichelten Linien die geneigte Mantelfläche des kegelstumpfförmigen Abschnittes K gegenüber der Mantelfläche des zylindrischen Abschnittes Z des Formkopfes 10 angezeigt. Wie hieraus ersichtlich ist, ist die kegelstumpfförmige Mantelfläche K gegenüber der zylindrischen Mantelfläche Z um den Winkel W geneigt. Der kegelstumpfförmige Abschnitt K verbessert das Einbringen des Formkopfes10 in einer Vorbohrung 20 und erleichter und unterstützt das Einfurchen des Furch-Faltstollens 13, da die Furchspitze 13.1 beim Formbohren stetig und mit einem zunehmenden Größe in die Wandung des Vorbohrung eingreift und mehr Material 71 zum Ausbilden der Passungsbohrung 34 verdrängen kann.

Ein Ausbilden und Formen der Passungsbohrung erfolgt im Wesentlichen im zylindrischen Abschnitt Z, da hier der Abstand zwischen der Wandung 30 der Vorbohrung 32 und dem Formschaft 12 im Wesentlichen konstant ist.

In Figur 7 ist in einem vergrößerten Maßstab ein Mantelflächenabschnitt des Formkopfes 10 und dessen Furch-Faltstollen 13 und die davon definierte Formnut 11 mit einem Abschnitt der Vorbohrung 32 und dem mit der Formnut 11 maximal verformbaren Material 71 dargestellt.

Die Formnut 11 wird von den seitlichen Furch-Faltsollenabschnitten 13a, 13b des Furch-Faltsollens 13 definiert. Das maximal verformbare Materialvolumen wird von der der Abmessung der Formnut 11 und den Abmessungen der seitlich benachbarten Abschnitte der Furchspitze 13.1 und der Furchwurzel 13.2 definiert.
Das Furch-Faltvolumen V2 wird insbesondere dadurch bestimmt wie viel Material der Furch-Faltsollen 13 aus der Wandung 31 der Vorbohrung 32 verdrängen kann. Die Volumen-Abmessung V1 des Furch-Faltstollens ist bevorzugt gleich oder kleiner als das Form-Volumen V2 der Formnut 11 und der Furchwurzel 13.2 (V1 ≤ V2).
Das Ausbilden der Passungsbohrung 34 wird bevorzugt mit folgenden Verfahrensschritten durchgeführt.

Zunächst wird eine Vorbohrung 32 mit einem vorbestimmten Innendurchmesser b, ausgebildet. Bevorzugt ist der Innendurchmesser b der Vorbohrung 32 größer als der Innendurchmesser der auszubildenden Passungsbohrung 34.
Hiernach folgt ein Furchvorgang, bei dem in der Innenwandung der Vorbohrung 32 eine Furche 70 ausgebildet wird. Die Furche 70 erstreckt sich bevorzugt schraubenlinienförmig in der Innenwandung der Vorbohrung, wobei sich seitlich der Furche 70 das aus der Furche 70 verdrängte Material als eine Materialwulst 71 erstreckt.
Die Materialwulst 71 wird zum Bilden der Passungsbohrung gegen die Wandung 31 der Vorbohrung 32 zurückgefaltet, wobei die Furche nicht verfüllt wird.
Das Furchen, Verdrängen und Falten des Materials zum Ausbilden der Passungsbohrung 34 wird bevorzugt mittels des erfindungsgemäßen Bohrungsformers 1 durchgeführt.

## Patentansprüche

1. Verfahren zum Ausbilden einer Bohrung (34), insbesondere einer Passungsbohrung (34), in einem Werkstück (31), aufweisend folgende Schritte,
- Ausbilden einer Vorbohrung (32) mit einem vorbestimmten Innendurchmesser (b), die von der Innenwandung (30) der Vorbohrung (32) definiert wird,
- Ausfurchen eines Furchganges (70) durch Verdrängen von Material (71) aus dem Furchgang (70),
- Zurückfalten des aus dem Furchgang (70) ausgebrachten Materials (71) gegen die Innenwandung der Vorbohrung (32) unter Ausbildung der Passungsbohrung (34), wobei der Furchgang (70) erhalten bleibt.

2. Verfahren nach Anspruch 1, **dadurch gekennzeichnet, dass** das Ausfurchen und Zurückdrücken eine translatorische (Lx) und rotatorische Bewegungskomponente (Mx) aufweist, die mittels einer schraubenlinienförmige Furchbewegung erzielt werden, wobei nacheinander ein Ausfurchen, Verdrängen, Zurückfalten und Glätten des aus der Innenwandung der Vorbohrung ausgebrachten Materials (71) erfolgt.

3. Verfahren nach Anspruch 1 oder 2, **dadurch gekennzeichnet, dass** die Vorbohrung (32) vor dem Ausbilden der Passungsbohrung (34) einen größeren Innendurchmesser (b) aufweist, als der Innendurchmesser (a) der Passungsbohrung (34).

4. Verfahren nach Anspruch 3, **dadurch gekennzeichnet, dass** der Durchmesser (b) der Vorbohrung größer ausgebildet wird, als der Außendurchmesser (a) eines Formschafts (12) eines Formkopfes (10) eines Bohrungsformers (1), der um seine Längsachse (L) rotiert wird, wobei der Bohrungsformer (1) während des Rotierens Material (71) der Innenwandung (30) der Vorbohrung (32) furcht und gegen die Innenwandung (30) faltet.

5. Verfahren nach einem der vorhergehenden Ansprüche 1 bis 4, **dadurch gekennzeichnet, dass** als Bohrungsformer (1) zum Ausbilden der Bohrung (34) in dem Werkstück (31) der Bohrungsformer (1) gemäß wenigstens einem der Ansprüche 6 bis 10 verwendet wird und die rotatorische (Mx)und translatorische Bewegung (Lz) des Bohrungsformers (1) in Abhängigkeit eines schraubenlinienförmigen Verlaufs eines Furch-Faltstollens (13) des Bohrungsformers durchgeführt wird.

6. Bohrungsformer (1) zum Ausbilden einer Bohrung, insbesondere einer Passungsbohrung, insbesondere zur Durchführung eines Verfahrens nach wenigstens einem der Ansprüche 1 bis 5, **gekennzeichnet durch** einen Formkopf (10), der einen konusförmigen Abschnitt (K) aufweist, dessen Umfangsfläche einen schraubenlinienförmig verlaufenden Furch-Faltstollen (13) aufweist, der eine Formnut (11) definiert, die von eine Furchspitze (13.1) und eine Faltwurzel (13.2) des Furch-Faltstollen (13) definiert wird, wobei die Furchspitze (13.1) zum Ausfurchen von Material ausgebildet ist und die Faltwurzel (13.2) zum Zurückfalten des herausgefurchten Material ausgebildet ist, wobei das zurückgefaltete Material seitlich eines von der Furchspitze (13.1) ausgebildeten Furchganges mittels der Faltwurzel (13.2) gegen die Wandung der Bohrung zurückfaltbar ist, wobei der Furchgang aufrechterhalten wird.

7. Bohrungsformer (1) nach Anspruch 6, **dadurch gekennzeichnet, dass** der schraubenlinienförmig verlaufende Furch-Faltstollen (13) an einem Formschaft (12) des Bohrungsformers (1) formschlüssig über eine Furch-Faltstollenwurzel (14) umfänglich angeordnet ist, wobei die Kontur der Furch-Faltstollenwurzel (14) über den schraubenlinienförmigen Verlauf veränderlich oder konstant ist.

8. Bohrungsformer nach mindestens einem der Ansprüche 6 oder 7, **dadurch gekennzeichnet, dass** der schraubenlinienförmigen Verlauf der Formnut (11) versetzt zu dem schraubenlinienförmigen Verlauf des Furch-Faltstollens (13) an dem Formschaft (12) ausgebildet ist.

9. Bohrungsformer (1) nach mindestens einem der vorhergehenden Ansprüche 7 oder 8, **dadurch gekennzeichnet, dass** der Formschaft (12) des Formkopfes (10) des Bohrungsformers (1) an der Formkopfspitze (15) einen konusförmigen Abschnitt (K) aufweist.

10. Bohrungsformer (1) nach Anspruch 9, **dadurch gekennzeichnet, dass** der Formkopf (10) einen zylindrischen Abschnitt (Z) aufweist, der an den konusförmigen Abschnitt (K) angrenzt, wobei der Furch-Faltstollen (13) sich wenigstens um einen der beiden Abschnitte schraubenlinienförmig erstreckt.

11. Bohrungsformer (1) nach einem der vorhergehenden Ansprüche 6 bis 10, **dadurch gekennzeichnet, dass** der Furch-Faltstollen (13) eine Furchspitze (13.1) und eine Faltwurzel (13.2) aufweist, wobei der Abstand (h) zwischen der Furchspitze (13.1) und der Faltwurzel (13.2) über den schraubenlinienförmig Verlauf des Furch-Faltstollens (13) von der Formkopfspitze (15) hin zu dem Montageschaft (20) abnimmt.

12. Bohrungsformer (1) nach Anspruch 11, **dadurch gekennzeichnet, dass** das von der Formnut (11) und der Faltwurzel (13.2) definierte Form-Volumen (V2) in einer Längsschnittansicht des Bohrungsformers (1) größer oder gleich dem Furch-Volumen (V1) des zugehörigen Furch-Faltstollen (13) ist.

## Claims

1. Method for forming a hole (34), in particular a fitting hole (34), in a workpiece (31), comprising the following steps:
- forming a pre-hole (32) having a predetermined inner diameter (b) defined by the inner wall (30) of the pre-hole (32),
- furrowing a furrow passageway (70) by displacing material (71) from the furrow passageway (70),
- folding back the material (71) removed from the furrow passageway (70) against the inner wall of the pre-hole (32) to form the fitting hole (34), wherein the furrow passageway (70) is maintained.

2. Method according to claim 1, **characterized in that** the furrowing and pushing back has a translational (Lx) and rotational movement component (Mx) which are achieved by means of a helical furrowing movement, wherein furrowing, displacing, folding back and smoothing of the material (71) removed from the inner wall of the pre-hole takes place successively.

3. Method according to claim 1 or 2, **characterized in that** the pre-hole (32) has a larger inner diameter (b) than the inner diameter (a) of the fitting hole (34) before the formation of the fitting hole (34).

4. Method according to claim 3, **characterized in that** the diameter (b) of the pre-hole is made larger than the outer diameter (a) of a forming shaft (12) of a forming head (10) of a hole former (1) which is rotated about its longitudinal axis (L), wherein the hole former (1), during the rotation, furrows material (71) of the inner wall (30) of the pre-hole (32) and folds it against the inner wall (30).

5. Method according to one of the preceding claims 1 to 4, **characterized in that** the hole former (1) according to at least one of claims 6 to 10 is used as the hole former (1) for forming the hole (34) in the workpiece (31), and the rotational (Mx) and translational movement (Lz) of the hole former (1) is carried out as a function of a helical course of a furrow-folding cleat (13) of the hole former.

6. Hole former (1) for forming a hole, in particular a fitting hole, in particular for carrying out a method according to at least one of claims 1 to 5, **characterized by** a forming head (10) which has a conical section (K), the circumferential surface of which has a helically extending furrow-folding cleat (13) which defines a form groove (11) defined by a furrow tip (13.1) and a folding root (13.2) of the furrow-folding cleat (13), wherein the furrow tip (13.1) is configured for furrowing material and the folding groove (13.2) is configured for folding back the furrowed material, wherein the folded-back material at the side of a furrow passageway formed by the furrow tip (13.1) can be folded back by means of the folding root (13.2) against the wall of the hole, wherein the furrow passageway is maintained.

7. Hole former (1) according to claim 6, **characterized in that** the helically extending furrow-folding cleat (13) is arranged circumferentially on a forming shaft (12) of the hole former (1) in a form-fitting manner over a furrow-folding cleat root (14), wherein the contour of the furrow-folding cleat root (14) is variable or constant over the helical course.

8. Hole former according to at least one of claims 6 or 7, **characterized in that** the helical course of the form groove (11) is configured offset from the helical course of the furrow-folding cleat (13) on the forming shaft (12).

9. Hole former (1) according to at least one of the preceding claims 7 or 8, **characterized in that** the forming shaft (12) of the forming head (10) of the hole former (1) has a conical section (K) at the forming head tip (15).

10. Hole former (1) according to claim 9, **characterized in that** the forming head (10) has a cylindrical section (Z) which adjoins the conical section (K), wherein the furrow-folding cleat (13) extends helically around at least one of the two sections.

11. Hole former (1) according to one of the preceding claims 6 to 10, **characterized in that** the furrow-folding cleat (13) has a furrow tip (13.1) and a folding root (13.2), wherein the distance (h) between the furrow tip (13.1) and the folding root (13.2) is decreasing over the helical course of the furrow-folding cleat (13) from the forming head tip (15) to the mounting shaft (20).

12. Hole former (1) according to claim 11, **characterized in that** the form volume (V2) defined by the form groove (11) and the folding root (13.2) in a longitudinal sectional view of the hole former (1) is greater than or equal to the furrow volume (V1) of the associated furrow-folding cleat (13).

## Revendications

1. Procédé pour réaliser un alésage (34), notamment un alésage ajusté (34), dans une pièce d'oeuvre (31), comprenant les étapes suivantes consistant à
- former un avant-trou (32) d'un diamètre intérieur (b) prédéterminé, défini par la paroi intérieure (30) de l'avant-trou (32),
- creuser un sillon pour produire une spire de sillon (70) par refoulement de matériau (71) hors de la spire de sillon (70),
- rabattre contre la paroi intérieure de l'avant-trou (32), le matériau (71) ayant été excavé de la spire de sillon (70), en formant ainsi l'alésage ajusté (34), la spire de sillon (70) restant conservée.

2. Procédé selon la revendication 1, **caractérisé en ce que** l'opération consistant à creuser le sillon et à rabattre comprend une composante de mouvement de translation (Lx) et une composante de mouvement de rotation (Mx), qui sont obtenues par un mouvement de creusement de sillon selon une ligne hélicoïdale, procédé d'après lequel est effectué successivement le creusement de sillon, le refoulement, le rabattement et le lissage du matériau (71) ayant été excavé de la paroi intérieure de l'avant-trou.

3. Procédé selon la revendication 1 ou la revendication 2, **caractérisé en ce que** l'avant-trou (32) présente, avant la réalisation de l'alésage ajusté (34), un diamètre intérieur (b) plus grand que le diamètre intérieur (a) de l'alésage ajusté (34).

4. Procédé selon la revendication 3, **caractérisé en ce que** le diamètre (b) de l'avant-trou est réalisé plus grand que le diamètre extérieur (a) d'une tige de formage (12) d'une tête de formage (10) d'un outil de formage d'alésage (1), que l'on fait tourner autour de son axe longitudinal (L), l'outil de formage d'alésage (1) creusant un sillon, pendant la rotation, en refoulant du matériau (71) de la paroi intérieure (30) de l'avant-trou (32), et en le rabattant contre la paroi intérieure (30).

5. Procédé selon l'une des revendications précédentes 1 à 4, **caractérisé en ce que** l'on utilise en tant qu'outil de formage d'alésage (1) pour assurer le formage de l'alésage (34) dans la pièce d'oeuvre (31), l'outil de formage d'alésage (1) selon l'une au moins des revendications 6 à 10, et le mouvement de rotation (Mx) et de translation (Lx) de l'outil de formage d'alésage (1) est effectué en fonction d'un tracé sous forme de ligne hélicoïdale d'un filet de creusement de sillon et de rabattement (13) de l'outil de formage d'alésage.

6. Outil de formage d'alésage (1) pour réaliser un alésage, notamment un alésage ajusté, en particulier pour la mise en oeuvre d'un procédé selon l'une au moins des revendications 1 à 5, **caractérisé par** une tête de formage (10), qui comporte un tronçon (K) de forme conique, et dont la surface périphérique présente un filet de creusement de sillon et de rabattement (13), qui définit une rainure de formage (11) délimitée par une pointe de creusement de sillon (13.1) et une embase de rabattement (13.2) du filet de creusement de sillon et de rabattement (13), la pointe de creusement de sillon (13.1) étant configurée pour creuser un sillon en refoulant du matériau, et l'embase de rabattement (13.2) pour rabattre le matériau ayant été refoulé hors du sillon, le matériau rabattu pouvant être rabattu à l'aide de l'embase de rabattement (13.2) contre la paroi de l'alésage, latéralement à une spire de sillon formée par la pointe de creusement de sillon (13.1), la spire de sillon restant conservée.

7. Outil de formage d'alésage (1) selon la revendication 6, **caractérisé en ce que** le filet de creusement de sillon et de rabattement (13) sous forme de ligne hélicoïdale, est agencé de manière périphérique sur une tige de formage (12) de l'outil de formage d'alésage (1), par complémentarité de formes par l'intermédiaire d'une embase de filet de creusement de sillon et de rabattement (14), le contour de l'embase de filet de creusement de sillon et de rabattement (14) étant variable ou constant le long du tracé en forme de ligne hélicoïdale.

8. Outil de formage d'alésage selon l'une au moins des revendications 6 ou 7, **caractérisé en ce que** tracé en forme de ligne hélicoïdale de la rainure de formage (11) est réalisé de manière décalée par rapport au tracé en forme de ligne hélicoïdale du filet de creusement de sillon et de rabattement (13) sur la tige de formage (12).

9. Outil de formage d'alésage (1) selon l'une au moins des revendications précédentes 7 ou 8, **caractérisé en ce que** la tige de formage (12) de la tête de formage (10) de l'outil de formage d'alésage (1) présente, au niveau de la pointe de tête de formage (15), un tronçon (K) de forme conique.

10. Outil de formage d'alésage (1) selon la revendication 9, **caractérisé en ce que** la tête de formage (10) présente un tronçon cylindrique (Z), qui est adjacent au tronçon (K) de forme conique, le filet de creusement de sillon et de rabattement (13) s'étendant sous forme de ligne hélicoïdale autour d'au moins l'un desdits deux tronçons.

11. Outil de formage d'alésage (1) selon l'une au moins des revendications précédentes 6 à 10, **caractérisé en ce que** le filet de creusement de sillon et de rabattement (13) comprend une pointe de creusement de sillon (13.1) et une embase de rabattement (13.2), la distance (h) entre la pointe de creusement de sillon (13.1) et l'embase de rabattement (13.2) diminuant le long du tracé sous forme de ligne hélicoïdale du filet de creusement de sillon et de rabattement (13), à partir de la pointe de tête de formage (15) en direction de la queue de montage (20).

12. Outil de formage d'alésage (1) selon la revendication 11, **caractérisé en ce que** le volume de formage (V2), qui est défini par la rainure de formage (11) et l'embase de rabattement (13.2) dans une vue en coupe longitudinale de l'outil de formage d'alésage (1), est supérieur ou égal au volume de creusement de sillon (V1) du filet de creusement de sillon et de rabattement (13) associé.
